## Europäisches Patentamt

## European Patent Office

## Office européen des brevets

(11) Veröffentlichungsnummer: **0 144 956**
**B1**

(12) **EUROPÄISCHE PATENTSCHRIFT**

(45) Veröffentlichungstag der Patentschrift:
**19.04.89**

(21) Anmeldenummer: **84114692.1**

(22) Anmeldetag: **03.12.84**

(51) Int. Cl.⁴: **B 01 D 53/14**

(54) Verfahren und Vorrichtung zum Regenerieren eines Lösungsmittels.

(30) Priorität: **05.12.83 DE 3343916**

(43) Veröffentlichungstag der Anmeldung:
**19.06.85 Patentblatt 85/25**

(45) Bekanntmachung des Hinweises auf die Patenterteilung:
**19.04.89 Patentblatt 89/16**

(84) Benannte Vertragsstaaten:
**AT BE DE FR GB IT LU NL SE**

(56) Entgegenhaltungen:
**EP-A-0 033 029**
**EP-A-0 054 783**
**EP-A-0 081 241**
**DE-A-2 856 078**

(73) Patentinhaber: **Linde Aktiengesellschaft, Abraham-Lincoln- Strasse 21, D-6200 Wiesbaden (DE)**

(72) Erfinder: **Ranke, Gerhard, Dipl.- Ing., Feichtetstrasse 6, D-8134 Pöcking (DE)**
Erfinder: **Weiss, Horst, Dipl.- Ing., Neufriedenheimer Strasse 37a, D-8000 München 70 (DE)**

(74) Vertreter: **Schaefer, Gerhard, Dr., Linde Aktiengesellschaft Zentrale Patentabteilung, D-8023 Höllriegelskreuth (DE)**

**Beschreibung**

Die Erfindung betrifft ein Verfahren zum Regenerieren eines mit $CO_2$ und $H_2S$ beladenen physikalisch wirkenden Lösungsmittels, welches weitgehend von CO und Carbonlyen frei ist, bei dem das beladene Lösungsmittel zur Abtrennung des absorbierten $CO_2$ mit einem Strippgas behandelt und/oder entspannt und anschließend zur Abtrennung des absorbierten $H_2S$ angewärmt wird sowie eine Vorrichtung zur Durchführung des Verfahrens.

Für die Gewinnung einer konzentrierten $H_2S$-Fraktion in einer selektiven, physikalischen Sauergaswäsche ist es üblich, in einer Anreicherungssäule das mit $H_2S$ und $CO_2$ beladene Lösungsmittel bei reduziertem Druck mit einem Inertgas, normalerweise $N_2$, so zu strippen, daß die Hauptmenge des $CO_2$ abgetrieben wird und das besser lösliche $H_2S$ wenigstens teilweise im Lösungsmittel verbleibt. Im oberen Abschnitt der Anreicherungssäule wird gleichzeitig mit einem $H_2S$-freien Lösungsmittel aus dem aufsteigenden Gasgemisch das $H_2S$ zurückgewaschen. Durch diese Verfahrensführung wird erreicht, daß am Kopf $H_2S$-freies Restgas, das in der Hauptsache aus $CO_2$ und $N_2$ besteht, gewonnen wird, während $H_2S$-haltiges Lösungsmittel aus dem Sumpf abgezogen wird. Zur Gewinnung der $H_2S$-Fraktion bzw. zur Regenerierung des Lösungsmittels wird dieses in einer nachfolgenden Warmregeneriersäule mittels Sumpfheizung von $H_2S$ befreit, das über Kopf abgezogen wird. Dieses Verfahren ist beispielsweise in der DE-A-2 856 078 in Bezug auf Figur 1 beschrieben.

Theoretisch ist es möglich, durch Vergrößerung der Strippgasmenge immer mehr $CO_2$ abzustrippen und damit eine stärkere Konzentrierung des $H_2S$ zu erreichen. In der Praxis ist dies jedoch nicht so durchführbar, da bei Vergrößerung der Strippgasmenge automatisch auf die Lösungsmittelmenge am Kopf zur Rückwaschung des $H_2S$ ansteigt und somit im unteren Säulenabschnitt wieder eine größere Lösungsmittelmenge behandelt werden muß. Gleichzeitig steigt mit der größeren Strippgasmenge auch der interne Umsatz der Säule an, da zusammen mit dem $CO_2$ auch mehr $H_2S$ abgestrippt wird, wodurch im Rückwaschabschnitt ein starker Anstieg der Lösungswärme für die $H_2S$-Absorption auftritt.

Als Alternative für die $H_2S$-Anreicherung ist bekannt, einen Teil der $H_2S$-Fraktion vom Kopf der Warmregeneriersäule zurück zur Anreicherungssäule zu führen und aus dieser Fraktion das $H_2S$ zurückzuwaschen. So wird zum Beispiel in dem in der EP-A-2 054 783 beschriebenen Verfahren das vom Kopf der Regeneriersäule abgezogene Gas in eine Waschsäule geführt und die vom Kopf der Waschsäule abgezogene Gasfraktion sodann in den mittleren Bereich der $H_2S$-Anreicherungssäule eingespeist um zu vermeiden, das restliche, noch in der Fraktion enthaltene Schwefelverbindungen in die Atmosphäre abgegeben werden.

Um jedoch das $H_2S$ stärker anzureichern, ist in diesem Fall ein großer Teil des Kopfproduktes der Warmregeneriersäule zurückzuführen, wodurch gleichzeitig der Kälteverlust für die Anreicherungssäule ($H_2S$-Absorption), für die Waschmittel-Kondensation sowie der Wärmebedarf der Warmregeneriersäule (mehrfacher Abtrieb von $CO_2$ und $H_2S$) und Aufsättigung der Rückführung mit Waschmitteldampf beträchtlich ansteigen.

Da in vielen Fällen die Stickstoffmenge, die als Strippgas zur Verfügung steht, begrenzt ist, z. B. wegen der Auslegung des Luftzerlegers für die Gewinnung von $O_2$ für partielle Oxidation von C-haltigen Einsatzstoffen, ist es bisher notwendig gewesen, durch die eben beschriebene Rückführung einer Teilmenge der $H_2S$-Fraktion diese bezüglich $H_2S$ weiter zu konzentrieren.

Weiterhin ist bekannt, die $H_2S$-Konzentrierung auch ohne Verwendung von Strippgas durchzuführen. Bisher war in einem derartigen Fall vorgesehen, das beladene Lösungsmittel mittels Väkuum zu entspannen und die dabei entgaste $CO_2$-Fraktion auf den Druck einer Nachwaschsäule zu verdichten und dort zu verarbeiten.

Diese Verfahrensvariante wird beispielsweise ebenfalls in der DE-A-2 856 078 beschrieben. Darin wird beladenes Lösungsmittel vom Sumpf der Anreicherungssäule abgezogen, entspannt und in einen Abscheider eingeführt. Die bei der Entspannung freigesetzte gasförmige Fraktion, hauptsächlich aus $CO_2$ bestehend, wird in einem Kompressor auf den Druck der Anreicherungssäule rückverdichtet und in diese zurückgeführt, um dort der Behandlung mit einem zweiten Waschflüssigkeitsstrom unterzogen zu werden.

Bei diesem Verfahren ist der Druck in dem Entspannungsgefäß abhängig von der geforderten $H_2S$-Konzentration in der $H_2S$-Fraktion. Speziell bei niedrigerem $H_2S$-Gehalt im Rohgas oder geforderter hoher $H_2S$-Konzentration in der $H_2S$-Fraktion ist dabei größer Energieaufwand für die Absaugung der $CO_2$-Fraktion erforderlich.

Weiterhin ist auf der EF-A-0 081 241 eim Verfahren zur Entfernung von sauren Gasen aus CO-haltigen Gasgemischen, die außerdem Verbindungen von zur Carbonylbildung befähigten Schwermetallen enthalten, bekannt, bei dem das Waschmittel nach Aufnahme der sauren Gase durch Entspannen, Austreiben und Anwärmen mittels Wärmetauschern von den sauren Gasen befreit wird.

Das Stand-der-Technik-Verfahren enthält jedoch keine Lehre zum Regenerieren eines Lösungsmittels, welches zur Auswaschung von konvertiertem Gas verwendet worden ist. In solchen Gasen, z. B. Erdgasen ist das enthaltene CO weitgehend zu $CO_2$ und $H_2$ umgesetzt worden. Konvertierte Gase enthalten daher lediglich 0,5 bis 1 Mol% CO und 1 ppm bis 0,01 Mol% Carbonyle.

Ferner erfolgt die Erwärmung des beladenen Lösungsmittels bei dem bekannten Verfahren vor dem Eintritt des Lösungsmittels in einen Abscheider. Somit wird der in dem Abscheider erzeugte Kälteabfall nicht genutzt, was einen erhöhten Energieaufwand bedeutet.

Der vorliegenden Erfindung liegt daher die Aufgabe zugrunde, ein Verfahren der eingangs genannten Art zur Regenerierung eines weitgehend von CO und Carbonylen freien Lösungsmittels so auszugestalten, daß bei Reduzierung des Energieaufwandes die $H_2S$-Konzentration in der $H_2S$-Fraktion erhöht werden kann.

Diese Aufgabe wird erfindungsgemäß dadurch gelöst, daß die Abtrennung des $CO_2$ auf zwei verschiedenen Temperaturniveaus durchgeführt wird.

Es wurde bei dem Versuch, die $H_2S$-Konzentration der $H_2S$-Fraktion unter Einsparung von Energiebedarf zu erhöhen, gefunden, daß sich durch Abtreiben des $CO_2$ auf zwei verschiedenen Temperaturniveaus eine Konzentrierung des $H_2S$ wesentlich wirtschaftlicher erreichen läßt, als durch die oben beschriebenen Verfahren.

Gemäß einer vorteilhaften Ausführungsform des erfindungsgemäßen Verfahrems wird dabei das durch Strippen teilweise von $CO_2$ befreite Lösungsmittel angewärmt und bei erhöhter Temperatur zur weitgehenden Abtrennung von $CO_2$ mit einem Strippgas behandelt. Dabei wird zweckmäßig das kalte, teilweise gestrippte Lösungsmittel aus der Anreicherungssäule zunächst gegen regeneriertes Lösungsmittel angewärmt und anschließend bei erhöhter Temperatur mit Strippgas gestrippt.

Die zum Abstrippen eines gelösten Gases aus einer Flüssigkeit benötigte Inertgasmenge ist bei konstantem Druck nur von der Löslichkeit des betreffenden Gases abhängig, die mit steigender Temperatur abnimmt. Somit kann bei erhöhter Temperatur mit einer reduzierten Strippgasmenge das gelöste $CO_2$ abgetrieben werden. Damit ist für die Erzielung einer bestimmten $H_2S$-Konzentration im Sauergas eine kleinere Strippgasmenge erforderlich als bei Strippen bei tiefen Temperaturen. Da in dem Gasstrom, der die Warmstrippzone verläßt, entsprechend der Löslichkeit neben $CO_2$ auch $H_2S$ enthalten ist, muß dieser in einer nachgeschalteten Anreicherungssäule nachgereinigt werden.

Damit wird das Verfahren bevorzugt so durchgeführt, daß zunächst in einer ersten kalten Anreicherungssäule die Hauptmenge des $CO_2$ im unteren Teil abgetrieben und im oberen Teil der Säule mit $H_2S$-freiem Lösungsmittel das gleichzeitig abgetriebene $H_2S$ zurückgewaschen wird. Hierzu wird am untersten Boden dieser Säule ein Teil des Strippgases zugeführt. Nach Anwärmung des kaltgestrippten Lösungsmittels wird bei einer Zwischentemperatur, die bevorzugt um 30 bis 80° C, insbesondere um 50 bis 70° C, höher liegt, mit Vorteil mit einer reduzierten Strippgasmenge, insbesondere mit dem Rest des zur Verfügung stehenden Strippgases, das sind bis zu 50 %, bevorzugt 10 bis 30 %, weiteres $CO_2$ abgetrieben. Das Kopfprodukt wird in die Mitte der Kaltstrippsäule geführt und wirkt dort als Strippgas für die Grobreinigung.

Die Aufteilung der Strippsäule in eine kalte Grob- und eine warme Feinstrippzone hat noch folgende vorteilhafte Wirkung. Zum Entgasen von $CO_2$ aus einem beladenen Lösungsmittel wird ein bestimmter Wärmebetrag benötigt, der dem Lösungsmittel entnommen wird und zu einer Abkühlung des Lösungsmittels führt. Bei der kalten Grobstrippung fällt diese Abkühlung in einem Temperaturbereich an, der in der vorangehenden Waschsäule verwertet werden kann und somit zu einer Einsparung an Fremdkälte führt. Bei der Warmstrippung kann dagegen die Abkühlung des Lösungsmittels auf höherem Temperaturniveau nicht mehr zur Reduzierung des Fremdkältebedarfes verwendet werden.

Gemäß einer alternativen Variante des erfindungsgemäßen Verfahrens wird das durch Entspannung teilweise von $CO_2$ befreite Lösungsmittel weiter entspannt, angewärmt und einem Abscheider zugeführt und die dabei anfallende gasförmige $CO_2$-haltige Fraktion gegebenenfalls nach Verdichtung abgekühlt und erneut der ersten Druckstufe zugeführt, während die anfallende flüssige Fraktion der $H_2S$-Abtrennung zugeführt wird. Mit dieser Verfahrensführung kann auch bei $CO_2$-Abtrennung durch Entspannen der Energiebedarf reduziert werden, wenn nach Teilanwärmung ein Abscheider eingesetzt wird. Dabei kann gegebenenfalls die Absenkung des Druckes unter den Druck der Anreicherungssäule (erste Entspannung) und Verdichtung des abgesaugten Gases wirtschaftlich sein. Wie bei der Verfahrensführung unter Verwendung von Strippgas erfolgt auch hier die Anwärmung zweckmäßig im Wärmetausch zu regeneriertem Lösungsmittel um bevorzugt 30 bis 80° C, insbesondere 50 bis 70° C.

Durch Anwendung des neuen Verfahrensschrittes (Anwärmung-Abscheider) kann die Kopplung zwischen Vakuummaschine und $H_2S$-Konzentrierung entfallen. Die Absenkung des Druckes im kalten Entspannungsgefäß kann rein nach wirtschaftlichen Betrachtungen durchgeführt werden, d. h. auf der Grundlage eines Vergleiches zwischen Kältegewinn durch Entgasen der beladenen Flüssigkeit und Energiebedarf für Verdichtung des entgasten Flashgases und Abkühlung auf die Betriebstemperatur der Nachwäsche.

Die Erfindung bezieht sich überdies auf eine Vorrichtung zur Durchführung des Verfahrens mit einer $H_2S$-Anreicherungs-säule und einer mit deren Sumpf über eine Verbindungsleitung am Kopf verbundenen warmregeneriersäule, die dadurch gekennzeichnet ist, daß in der Verbindungsleitung mindestens ein Wärmetauscher angeordnet ist, der über eine Leitung mit dem Sumpf der Warmregeneriersäule verbunden ist. Dabei ist in der verbindungsleitung eine Strippsäule oder alternativ mindestens ein Abscheider angeordnet, wobei die Strippsäule bzw. der Abscheider über Kopf mit der $H_2S$-Anreicherungs-säule und über den Sumpf mit der Warmregeneriersäule verbunden ist.

Als Lösungsmittel kommen für das erfindungsgemäße Verfahren alle physikalisch wirkenden Absorptionslösungen in Frage, die insbesondere eine Selektivität für $H_2S$ gegenüber $CO_2$ aufweisen. Diese Lösungsmittel sind dabei insbesondere Alkohole, wie Methanol, Ketone, N-Methylpyrrolidon, Dimethylformamid, Polyäthylenglykoläther, Aromaten.

Im folgenden sei das erfindungsgemäße verfahren anhand eines in zwei Figuren schematisch dargestellten Ausführungsbeispiels näher erläutert.

Es zeigen:

Figur 1   Verfahrensführung unter Verwendung eines Strippgases
Figur 2   Verfahrensführung ohne Strippgas.

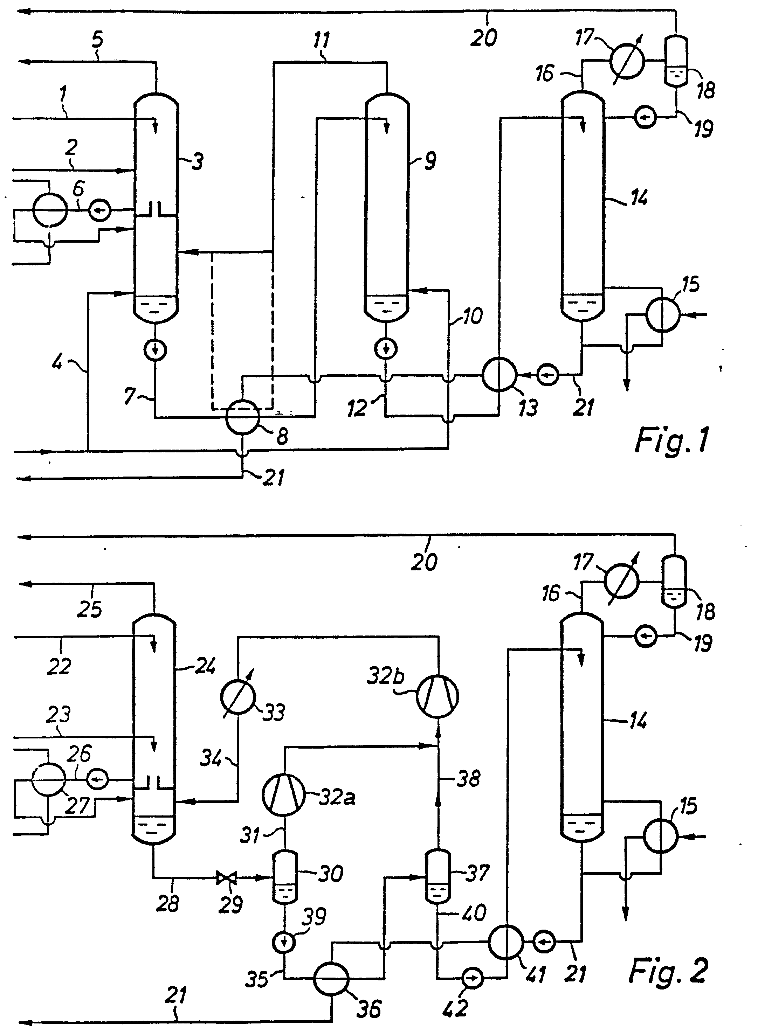

Gemäß Figur 1 werden über Leitung 1 aus einer nichtdargestellten, vorangehenden Wäsche 60 m³/h mit $CO_2$ beladenes Methanol und über Leitung 2 40m³/h mit $H_2S$ beladenes Methanol in eine $H_2S$-Anreicherungssäule 3 eingeführt. Der Arbeitsdruck der Säule 3 beträgt 2,4 bar. Gleichzeitig werden der Säule 3 im unteren Teil über Leitung 4 2000 Nm³/h eines Strippgases, zum Beispiel $N_2$, mit einer Temperatur von 30° C zugeführt. Das aufsteigende Strippgas treibt das im Methanol absorbierte $CO_2$ aus, so daß am Kopf über Leitung 5 Restgas bestehend aus überwiegend $CO_2$ und $N_2$ abgezogen wird. Durch das Strippgas würde auch ein Teil des besser im Methanol löslichen $H_2S$ ausgetrieben werden. Um dies zu verhindern, wird das $H_2S$ mit dem im oberen Bereich der Säule 3 aufgegebenen $CO_2$-haltigen Methanol rückgewaschen.

Über Leitung 8 wird das gesamte Methanol mit einer Temperatur von -55° C abgezogen und nach Anwärmung auf -30° C wieder in die Säule 2 eingeführt. Durch die Anwärmung wird weiteres $CO_2$ aus dem Methanol ausgetrieben.

Über Leitung 7 wird das teilweise von $CO_2$ befreite Methanol mit einer Temperatur von -37° C abgezogen, im Wärmetausch 8 gegen regeneriertes Methanol auf 34° C angewärmt und oben einer zweiten $H_2S$-Anreicherungssäule 9 (Warmstrippsäule) aufgegeben. Die Säule 9 arbeitet bei einem Druck von 2,7 bar. Dieser Säule 9 werden im unteren Teil über Leitung 10 400 Nm³/h des Strippgases mit einer Temperatur von + 30° C zugeführt. Das Strippgas treibt das noch im Methanol vorhandene $CO_2$ sowie etwas $H_2S$ aus, so daß über Leitung 11 vom Kopf der Säule 9 900 Nm³/h Restgas bestehend aus $CO_2$, $N_2$ und 25 Nm³/h $H_2S$ mit einer Temperatur von 34° C abgezogen werden. Dieses Restgas wird zur Rückwaschung des $H_2S$ der Säule 3 im unteren Bereich zugeführt.

Über Leitung 12 wird weitgehend von $CO_2$ befreites Methanol mit einer Temperatur von 32° C abgezogen, im Wärmetausch zu warmem (102° C), regeneriertem Methanol auf 87° C angewärmt und einer Warmregeneriersäule 14 im oberen Bereich aufgegeben. Die Warmregeneriersäule 14 arbeitet bei einem Druck von 3 bar und ist am Sumpf mit einer dampfbetriebenen Heizung 15 ausgestattet. Mittels dieser Sumpfheizung wird das im Methanol absorbierte $H_2S$ ausgetrieben und über Leitung 16 vom Kopf der Säule 14 abgezogen. Nach Abkühlung in einem Kühler 17 gegen Fremdkälte (20 000 kcal/h) und Abscheidung 18 von kondensiertem Methanol, das über Leitung 19 zur Säule 14 zurückgeführt wird, werden über Leitung 20 275 Nm³/h einer $H_2S$-Fraktion mit 28 mol% $H_2S$ bei einer Temperatur von -35° C gewonnen. Vom Sumpf der warmen Regeneriersäule 14 wird über Leitung 21 regeneriertes Methanol mit 102° C abgezogen und nach Abkühlung im Wärmetauscher 13 und 8 zur Wäsche zurückgeführt.

Mit dieser Verfahrensführung wird gegenüber dem bisher bekannten Verfahren ohne Warmstrippsäule 8 bei ansonsten gleichen Bedingungen eine Einsparung an Fremdkälte von 70 000 kcal/h erzielt, die insbesondere durch einen verringerten Energieverbrauch an Fremdkälte zur Abkühlung des Kopfproduktes der Warmregeneriersäule 14 im Kühler 17 erreicht wird.

Gemäß Figur 2 werden über Leitung 22 aus einer nichtdargestellten, vorangehenden Wäsche 80 m³/h mit $CO_2$ beladenes Lösungsmittel und über Leitung 23 40 m³/h mit $H_2S$ beladenes Lösungsmittel in eine $H_2S$-Anreicherungssäule 24 entspannt. In der Säule 24 herrscht ein Druck von 2,1 bar. Durch die Drucksenkung wird das schlechter lösliche $CO_2$ aus dem Lösungsmittel abgetrieben und über Leitung 25 vom Kopf der Säule 24 abgezogen. Um zu verhindern, daß auch $H_2S$ mit ausgetrieben wird, wird das $H_2S$ mit dem im oberen Bereich der Anreicherungssäule 24 zugeführten mit $CO_2$ beladenen Lösungsmittel rückgewaschen.

Über Leitung 26 wird von der Mitte der Säule 24 das gesamte Lösungsmittel mit einer Temperatur von -55° C abgezogen, in einem Wärmetauscher 27 auf -29° C angewärmt und wieder in die Säule 24 eingeführt. Durch diese Anwärmung wird weiteres $CO_2$ aus dem Lösungsmittel ausgetrieben.

Über Leitung 28 wird teilweise von $CO_2$ befreites Lösungsmittels mit einer Temperatur von -29° C abgezogen, auf einen Druck von 0,4 bar entspannt (29) und einem Abscheider 30 zugeführt. Durch die Entspannung entgast weiteres $CO_2$, das als gasförmige Fraktion über Leitung 31 aus dem Abscheider 30 abgezogen, in einem zweistufigen verdichter 32a, 32b auf 1,2 bzw. 2,1 bar verdichtet und nach Kühlung (33) gegen Fremdkälte über Leitung 34 wieder auf die Säule 24 zur Rückwaschung von $H_2S$ aufgegeben wird. In dieser gasförmigen Fraktion, die 2.475 Nm³/h beträgt, sind 74 Nm³/h $H_2S$ enthalten.

Das noch mit $CO_2$ und $H_2S$ beladene Methanol aus dem Abscheider 30 wird mit einer Temperatur von -39°C über Leitung 35 mit Pumpe 39 abgezogen, im Wärmetausch 36 zu regeneriertem Lösungsmittel auf 32°C angewärmt und einem weiteren Abscheider 37 zugeführt, in dem ein Druck von 1,2 bar herrscht. Durch die Anwärmung wird zusätzliches $CO_2$ ausgetrieben, das als gasförmige Fraktion (490 Nm³/h, davon 31 Nm³/h $H_2S$) über Leitung 38 aus dem Abscheider 37 abgezogen und nach Verdichtung auf 2,1 bar und Abkühlung ebenfalls der Säule 24 zugeführt wird.

Das nunmehr weitgehend von $CO_2$ befreite Methanol wird über Leitung 40 aus dem Abscheider 37 abgezogen, auf den Druck einer nachfolgenden Warmregeneriersäule 14 gepumpt (42) im Wärmetausch 41 zu warmem, regeneriertem Lösungsmittel auf 87°C angewärmt und der Säule 14 oben aufgegeben. Die Warmregeneriersäule 14 arbeitet dabei in der zu Figur 1 beschriebenen Weise.

**Patentansprüche**

1. Verfahren zum Regenerieren eines mit $CO_2$ und $H_2S$ beladenen physikalisch wirkenden Lösungsmittels, welches weitgehend von CO und Carbonylen frei ist, bei dem das beladene Lösungsmittel zur Abtrennung des absorbierten $CO_2$ mit einem Strippgas behandelt und/oder entspannt und anschließend zur Abtrennung des absorbierten $H_2S$ angewärmt wird, dadurch gekennzeichnet, daß die Abtrennung des $CO_2$ auf zwei verschiedenen Temperaturniveaus durchgeführt wird.

2. Verfahren nach Anspruch 1, dadurch gekennzeichnet, daß das durch Strippen teilweise von $CO_2$ befreite Lösungsmittel angewärmt und bei erhöhter Temperatur zur weitgehenden Abtrennung von $CO_2$ mit einem Strippgas behandelt wird.

3. Verfahren nach Anspruch 2, dadurch gekennzeichnet, daß zur weitgehenden Abtrennung von $CO_2$ eine reduzierte Strippgasmenge verwendet wird.

4. Verfahren nach Anspruch 3, dadurch gekennzeichnet, daß zur weitgehenden Abtrennung von $CO_2$ bis zu 50 %, bevorzugt 10 bis 30 % der zur Abtrennung von $CO_2$ zur Verfügung stehenden Strippgasmenge verwendet wird.

5. Verfahren nach Anspruch 1, dadurch gekennzeichnet, daß das durch Entspannung teilweise von $CO_2$ befreite Lösungsmittel weiter entspannt, angewärmt und einem Abscheider zugeführt wird und daß die dabei anfallende gasförmige, $CO_2$-haltige Fraktion gegebenenfalls nach Verdichtung abgekühlt und erneut der ersten Druckstufe zugeführt wird, während die anfallende flüssige Fraktion der $H_2S$-Abtrennung zugeführt wird.

6. Verfahren nach einem der Ansprüche 1 bis 5, dadurch gekennzeichnet, daß die Anwärmung des teilweise von $CO_2$ befreiten Lösungsmittels im Wärmetausch gegen regeneriertes Lösungsmittel erfolgt.

7. Verfahren nach einem der Ansprüche 1 bis 6, dadurch gekennzeichnet, daß das teilweise von $CO_2$ befreite Lösungsmittel um 30 bis 80°C, vorzugsweise 50 bis 70°C, angewärmt wird.

8. Vorrichtung zur Durchführung des Verfahrens nach einem der Ansprüche 1 bis 7 mit einer $H_2S$-Anreicherungssäule und einer mit deren Sumpf über eine Verbindungsleitung am Kopf verbundenen Warmregeneriersäule, dadurch gekennzeichnet, daß in der Verbindungsleitung mindestens ein Wärmetauscher angeordnet ist, der über eine Leitung mit dem Sumpf der Warmregeneriersäule verbunden ist und daß in der Verbindungsleitung eine Strippsäule oder alternativ mindestens ein Abscheider angeordnet ist, wobei die Strippsäule bzw. der Abscheider über Kopf mit der $H_2S$-Anreicherungssäule und über den Sumpf mit der Warmregeneriersäule verbunden ist.

**Claims**

1. A process for the regeneration of a physically active solvent which is charged with $SO_2$ and $H_2S$ and which is substantially free from CO and carbonyls, wherein the charged solvent is treated with a stripping gas and/or expanded in order to separate the absorbed $CO_2$ and is then heated in order to separate the absorbed $H_2S$, characterised in that the separation of the $CO_2$ is carried out at two different temperature levels.

2. A process as claimed in Claim 1, characterised in that the solvent which has been partially freed from $CO_2$ by stripping is heated and at an increased temperature is treated with a stripping gas for the substantial separation of $CO_2$.

3. A process as claimed in Claim 2, characterised in that a reduced quantity of stripping gas is used for the substantial separation of $CO_2$.

4. A process as claimed in Claim 3, characterised in that for the substantial separation of $CO_2$, up to 50 % and preferably 10 to 30 %, of the quantity of stripping gas available for the separation of $CO_2$ is used.

5. A process as claimed in Claim 1, characterised in that the solvent which has been partially freed from $CO_2$ by expansion is further expanded, heated and supplied to a precipitator, and that the gaseous fraction arising which contains $CO_2$ is cooled, where appropriate after compression, and is returned to the first pressure stage whilst the liquid fraction arising is supplied to the $H_2S$-separation stage.

6. A process as claimed in one of Claims 1 to 5, characterised in that the heating of the solvent which has been partially freed from $CO_2$ is carried out in a heat exchanger with regenerated solvent.

7. A process as claimed in one of Claims 1 to 6, characterised in that the solvent which has been partially freed from $CO_2$ is heated by 30 to 80°C, preferably 50 to 70°C.

8. Apparatus for carrying out the process claimed in one of Claims 1 to 7 comprising a $H_2S$-enrichment column and a hot regenerating column which is connected at its head through a connecting pipeline to the sump of the $H_2S$-enrichment column, characterised in that in the connecting pipeline there is arranged at least one heat exchanger which is connected through a pipeline to the sump of the hot regenerating column, and that in the connecting pipeline there is arranged a stripping column, or alternatively at least one precipitator, the stripping column or the precipitator being connected at its head to the $H_2S$-enrichment column and via its sump to the hot regenerating column.

**Revendications**

1. Procédé pour régénérer un solvant agissant par voie physique, chargé de $CO_2$ et de $H_2S$, et qui est sensiblement exempt de CO et de carbonyles, dans lequel le solvant chargé est traité avec un gaz d'entrainement pour séparer le $CO_2$ absorbé et/ou détendu et ensuite chauffé pour séparer le $H_2S$ absorbé, caractérisé en ce que le $CO_2$ est séparé à deux niveaux de température différents.

2. Procédé selon la revendication 1, caractérisé en ce que le solvant libéré partiellement du $CO_2$ par stripping, est chauffé et traité à température élevée avec un gaz d'entrainement pour séparer la plus grande part du $CO_2$.

3. Procédé selon la revendication 2, caractérisé en ce que l'on utilise une quantité de gaz d'entrainement réduite pour séparer la plus grande partie du $CO_2$.

4. Procédé selon la revendication 3, caractérisé en ce que l'on utilise pour séparer la plus grande partie du $CO_2$ jusqu'à 50 %, de préférence de 10 à 30 % de la quantité de gaz d'entrainement disponible pour la séparation du $CO_2$.

5. Procédé selon la révendication 1, caractérisé en ce que le solvant, partiellement libéré par détente du CO, est à nouveau détendu, chauffé et conduit à un séparateur et en ce que la fraction gazeuse à teneur de $CO_2$ apparaissant à ce moment est, le cas échéant, refroidie après la compression et reconduite au premier étage de pression, tandis que la fraction liquide qui apparait est conduite à la séparation du $H_2S$.

6. Procédé selon l'une des revendications 1 à 5, caractérisé en ce que le solvant, libéré partiellement du $CO_2$, est réchauffé par échange de chaleur avec le solvant régénéré.

7. Procédé selon l'une des revendications 1 à 6, caractérisé en ce que le solvant, libéré partiellement du $CO_2$, est réchauffé de 30 à 80°C, de préférence de 50 à 70°C.

8. Dispositif pour mettre en oeuvre le procédé selon l'une des revendications 1 à 7 au moyen d'une colonne d'enrichissement en $H_2S$ et d'une colonne chaude de régénération reliée en téte par une conduite de de liaison à la cuve de la colonne d'enrichissement, caractérisé en ce que l'on prévoit dans la conduite de liaison au moins un échangeur de chaleur, qui est relié par un conduit à la cuve de la colonne chaude de régénération et en ce que l'on prévoit dans la conduite de raccordement une colonne de stripping ou en variante au moins un séparateur, la colonnede stripping ou le séparateur étant relié en téte à la colonne d'enrichissement en $H_2S$ et, en cuve à la colonne chaude de régénération.

EP 0 144 956 B1

Fig.1

Fig. 2